Europäisches Patentamt

European Patent Office

Office européen des brevets

(11) Publication number: **0 446 805 A1**

# EUROPEAN PATENT APPLICATION

(21) Application number: **91103581.4**

(51) Int. Cl.⁵: **G01F 11/26**

(22) Date of filing: **08.03.91**

(30) Priority: **12.03.90 IT 1220490**
**11.02.91 IT 291**

(43) Date of publication of application:
**18.09.91 Bulletin 91/38**

(84) Designated Contracting States:
**CH DE ES FR GB IT LI**

(71) Applicant: CAPSULIT S.P.A.
Corso Indipendenza, 6
I-20129 Milano(IT)

(72) Inventor: **Mattoni, Guglielmo**
15, Via della Corte
I-03029 Castro Dei Volsci (FR)(IT)
Inventor: **Pozzoni Rizzardi, Vanna**
10, Via Zambeletti
I-20100 Milan(IT)

(74) Representative: **Marietti, Giuseppe**
STUDIO ASSOCIATO MARIETTI &
PIPPARELLI, Viale Caldara 38
I-20122 Milano(IT)

(54) A device and method for liquid metering and dispensing.

(57) A device for metering and dispensing liquids contained in flasks, bottles and similar containers comprises one metering chamber securable to the liquid container dispensing opening, two or more ducts connecting at request said container to said metering chamber, and means to dispense at request the metered liquid from said chamber. The liquid is fed to and dispensed from the metering chamber by gravity, upturning the container.

Fig.1

EP 0 446 805 A1

Rank Xerox (UK) Business Services

This invention relates to a device and a method for liquid metering and dispensing.

More specifically, this invention relates to a device and a method for repetitively metering and dispensing preselected volumes of liquid, such as medicines, syrups, sterilizing solutions etc.

The invention device is particularly suitable for measuring relatively low volumes of liquids, e.g. from 0,5 to 10 ml.

In order to meter a selected volume of liquid, e.g. a medical syrup, with a greater accuracy than that given by useing a spoon, small plastic beakers are used.

These beakers are provided with one or more marks defining a preselected volume corresponding to the required dose and are usually enclosed to the medicine flask as a separate item, housed in the same package.

While these beakers allow an easy metering of the liquid to be dispensed, they have the drawback or requiring to be accurately cleaned after use. A further drawback is in that, being separate from the liquid flask, the beakers are easily lost.

For the above reasons, an object of the invention is to provide a metering device for liquids that can be made integral with the liquid container, does not need to be washed after each use, and acts as plug of the container.

A further object of the invention is to provide a method that allows an easy and accurate dispensing of the liquid. These aims are achieved by means of the invention, which relates to a device for metering and dispensing liquids contained in flasks, bottles and similar containers characterized in that it comprises at least one metering chamber securable to the liquid container dispensing opening, two or more ducts connecting at request said container to said metering chamber, and means to dispense the metered liquid from said chamber to the outside.

The invention also relates to a method for metering and dispensing liquids from flasks, bottles, vials and similar liquid containers, characterized in that it comprises the steps of: connecting a metering chamber to said liquid container by means of two or more ducts;
gravity feeding said liquid to said metering chamber through said ducts;
disconnecting said metering chamber from said liquid container; and
dispensing the thus metered liquid.

According to a preferred embodiment of the invention, the device is comprising two separate cylindrical elements. A first element is fixed to the container opening while the second element, corresponding to the actual metering chamber, is tightly housed in said first element and is movable with respect to it.

Both elements have a plurality of ports that can be superimposed when required to form the feeding ducts or the dispensing ducts.

It is a peculiar advantage of the invention device to be securable to the liquid container, thus acting also as the container plug.

A further advantage of the invention is that the chamber is self-metering and the only operation required is to connect and disconnect the metering chamber to and from the liquid container, the liquid being gravity fed to the chamber and gravity dispensed from it.

The invention will now be further disclosed by reference to the drawings enclosed to an illustrative and non-limiting purpose, wherein:
- fig. 1-2 are sectional views of a preferred embodiment of the invention;
- fig. 3-4 are cross sections of fig. 1-2 embodiment;
- fig. 5-6 are sectional views of further embodiments;
- fig. 7-8 are a longitudinal section and an exploded, partially sectional view of a still further embodiment of the invention.

According to the invention, the device comprises at least one metering chamber fixable to the container opening, i.e. to the neck of a bottle, vial or flask. At least two ducts are provided, to feed at request by gravity, by upturning the container the liquid from the container to the metering chamber. Because of the reduced dimensions of the device and of the ducts, two ducts are required, one for the liquid flow into the chamber and one for the air flow from the chamber to the container.

No means to control the amount of liquid fed to the chamber are required, in that the liquid flow stops once its level has reached the ducts level. Therefore, in the preferred embodiment the dose volume is substantially corresponding to the chamber volume.

Further ducts or similar means are provided to dispense the metered liquid from the chamber.

As it will be better disclosed bereinbelow, the feeding ducts can be either reversible or permanent; in the latter case an intermediate chamber is requested, in order to act as means to disconnect the flow of liquid to the metering chamber while the already metered liquid is dispensed from it.

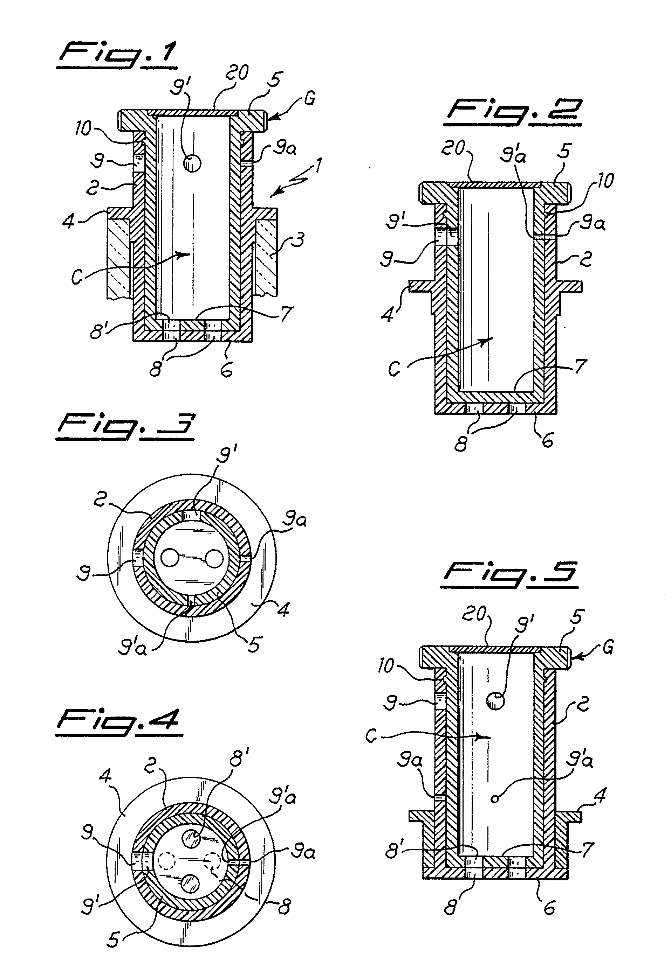

Figures 1-6 are referring to the first kind of embodiment, where the feeding ducts are directly and reversibly connecting the metering chamber to the container, only when required.

Referring to figures 1 and 2, the invention device 1 comprises a first cylindrical element 2 positionable and securable to the container opening 3, e.g. by means of flange 4 and of securing means such as a ring nut (not shown) urging in a known way the flange 4 against container opening 3.

Inside element 2 is inserted a second cylindrical element 5, closed at both ends and hollow, that is defining the actual metering chamber C. Element 5 is "tightly" housed within first element 2, i.e. there virtually is no room within the adjacent walls of elements 2 and 5, and is partially projecting from element 2 to provide a gripping portion G.

A small rim or any other suitable retaining element 10 is preferably projecting from one of elements 2 or 5, and cooperates with a corresponding groove provided on the remaining element to ensure a correct retention of said elements together.

Elements 2 and 5 are movable with respect to each other and, more specifically, element 2 is usually still, while element 5 is rotatable.

The bottom walls 6 and 7 of elements 2 and 5 are provided with at least two ports or holes 8, 8', respectively, that are superimposable upon rotating element 5 to form two or more ducts, as shown in fig. 1 and 3, where the holes 8, 8' are aligned and superimposed. In this position, upon upturning of the container, by gravity the liquid will enter chamber C and completely fill element 5. By rotating element 5 to the position shown in fig. 2, the metering chamber C is disconnected from container 3.

In order to dispense the liquid metered by element 5, in the preferred embodiments of figures 1-6 both element 2 and 5 are each provided with further holes, or ports 9, 9a, 9', 9a', of different diameters. Similarly to holes 8 and 8', also these further holes are superimposable upon rotation of element 5 to form dispensing ducts (fig. 2). Quite obviously, ports 9, 9a, 9', 9'a, are positioned staggered with respect to holes 8 and 8', in order to avoid simultaneous forming of feeding ducts and dispensing ducts, which would make impossible an exact metering.

As shown in figure 1-4, holes 8 and 8' have identical diameters; similarly, holes 9-9' and 9a- 9'a have identical diameter in order, when coupled, to form smooth ducts. However, inner diameter does not have to be the same for all ports and, preferably, holes 9a and 9'a have an identical diameter which is smaller that of than holes 9 and 9', in order to act as an air inlet when dispensing the metered liquid.

Holes 9, 9a and 9', 9'a may be axially opposed as in figures 1-4,6, or longitudinally adjacent, as in fig. 5 embodiment. If required, to improve liquid dispensing a spout (not shown) is secured to outer hole 9.

Other dispensing means may be used instead of holes 9-9'a, e.g. closing member 20 could be removable to allow dispensing of the liquid previously metered.

Usually device 1 is partially housed in the container, and dispensing holes are located onto the external portion of it. In fig. 6 embodiment, however, in the non-dispensing mode holes 9, 9', 9a and 9a' are housed substantially within container 3 opening. They can thus dispense to the outside the metered liquid only upon axially moving forward both elements 2 and 5 to the position shown with dotted lines in fig. 6, and upon rotating element 5 with respect to element 2 as previously disclosed.

In this case a plastic bushing 11 is also provided both as retaining and gliding element. As shown in fig. 6, a security cap 21 is preferably removably secured to element 2 and bushing 11 to ensure the packaging integrity until its first use, when cap 21 is removed to allow movement of elements 5 and 2. A similar cap, that is per se known in the art, may also be provided in the previously disclosed embodiments to temporarily secure together elements 2 and 5.

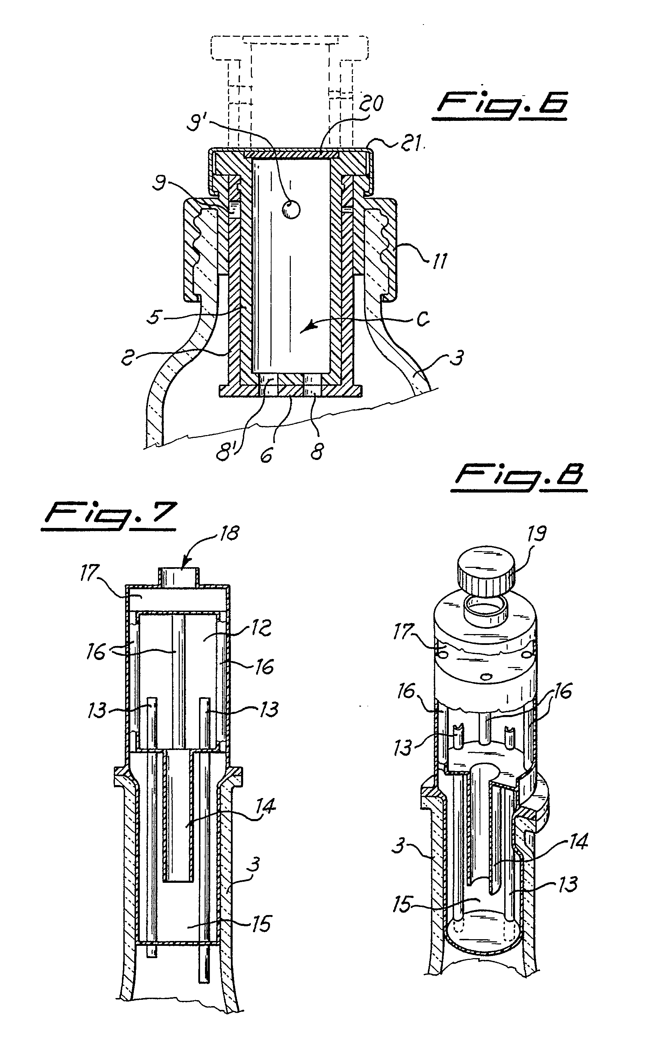

In figures 7 and 8 a further embodiment of the invention is disclosed.

In this embodiment the device 1 comprises a first receiving chamber 12, permanently connected by two ducts 13 to the liquid container 3, and by at least one further duct 14 to a second chamber 15, which is the actual metering chamber.

The metering chamber 15 is provided with dispensing ducts 16 that allow the metered liquid to be dispensed directly to the outside or, as shown in figures 7 and 8, to a third chamber 17 provided with an opening 18 and a plug 19. As disclosed in figures 7 and 8, second and first chamber 15, 12, are integral and axially aligned.

Chamber 15 is positioned under chamber 12 and is housing feeding ducts 13 without being in communication with them. Similarly, dispensing ducts 16 extend through receiving chamber 12 without communicating with it.

The elements that are forming the above disclosed embodiments are made usually in plastics, by any known method such as injection moulding, and thereafter assembled.

All the above disclosed embodiments are operated according to the same method, that comprises the steps of connecting a metering chamber to said liquid container by means of two or more ducts; gravity feeding said liquid to said metering chamber through said ducts; disconnecting said metering chamber from said liquid container; and dispensing the thus metered liquid.

If a device according to figures 1-6 is used, the metering chamber C, i.e. the hollow space within element 5, is connected or disconnected to and from container 3, through holes 8 and 8' forming at request the feeding ducts, by rotating element 5 with respect to element 2. Dispensing ducts are provided in the same way, i.e. by superimposing holes 9-9', and possibly, as in fig. 6 embodiment, by moving both elements 2 and 5 outside the liquid container 3.

Quite obviously, when forming feeding ducts, previously formed dispensing ducts are disconnected, and vice versa. This may be correctly achieved in a way known in the art by positioning means (not shown) such as a notch and pin configuration that ensure a correct reciprocal positioning of the two elements 2,5 in two alternative feeding and dispensing positions, plus an optional third position in which no duct at all is formed.

Once formed the feeding ducts, the liquid within container 3 is gravity fed to the metering chamber by upturning the container; the liquid will enter the chamber while the air will leave it, until the liquid level reaches the feeding ducts, i.e. until the chamber is completely filled.

Feeding ducts are then disconnected and dispensing ducts are formed by moving element 5 with respect to element 2; when dispensing the metered liquid, container 3, and device 1, are preferably horizontally positioned.

If a device according to figures 7 and 8 is used, container and device are first upturned to feed liquid to receiving chamber 12 until the extremities of ducts 13 are reached by the liquid level.

Secondly, container and device are again upturned (thus returning in the original position), gravity feeding the liquid from chamber 12 to chamber 15 through duct 14.

Finally, container and device are again upturned to dispense to the outside the liquid previously metered in chamber 15. It should be noted that chamber 15 actually meters the liquid in that only the liquid within the chamber is transferred to the outside, while the liquid within duct 14 is sent again to chamber 12.

## Claims

1. A device for metering and dispensing liquids contained in flasks, bottles and similar containers characterized in that it comprises at least one metering chamber (C; 15) securable to the liquid container dispensing opening (3), two or more ducts (8, 8'; 13, 14) connecting at request said container to said metering chamber, and means (9-9'a; 16-19) to dispense the metered liquid from said chamber.

2. A device according to claim 1, wherein said metering chamber (C) is at least partially housed inside said liquid container (3).

3. A device according to claim 1 or 2, comprising at least a first element (2) positioned onto said liquid container opening and a second hollow element (5) tightly housed within said first element and corresponding to said metering chamber (C); said first and second elements being movable with respect to each other and being provided with a first and a second plurality of holes (8, 8'), respectively; said pluralities of holes being superimposable at request to form said feeding ducts.

4. A device according to claim 3, wherein said first (2) and second (5) elements are each provided with further holes (9-9'a) superimposable at request to form dispensing duct means, said further holes being staggered from the relevant first or second plurality of holes (8, 8'), in order to avoid simultaneously forming of feeding ducts and dispensing ducts.

5. A device according to claim 3 or 4, wherein said first, outer element (2) is fixed to said liquid container and said second element (5) is movable with respect to the first element.

6. A device according to claim 3 or 4, wherein said first (2) and second (5) elements are both longitudinally movable with respect to said liquid container opening (3).

7. A device according to claim 1 or 2, characterized in comprising a first, receiving, chamber (12) connected by two or more ducts (13) to said liquid container (3), a second, metering, chamber (15) axially aligned to said first chamber (12), integral with it and connected to it by means of one or more further ducts (14), and further duct means (16) to dispense said metered liquid from said second, metering, chamber (15).

8. A method for metering and dispensing liquids from flasks, bottles, vials and similar liquid containers, characterized in that it comprises the steps of:
   connecting a metering chamber to said liquid container by means of two or more ducts;
   gravity feeding said liquid to said metering chamber through said ducts;
   disconnecting said metering chamber from said liquid container; and
   dispensing the thus metered liquid.

9. A method according to claim 8, wherein a device according to claim 3 is used and said metering chamber (C) is connected and disconnected to and from said liquid container by moving said first (2) or second (5) element with respect to each other.

10. A method according to claim 8 or 9, wherein a device according to claim 4 is used, and the metered liquid is dispensed through dispensing ducts formed by moving said first (2) or second (5) element with respect to each other, while at the same time disconnecting from the liquid container (3) said previously connected metering chamber (C).

11. A method according to claim 8, characterized in gravity feeding said liquid from said container (3) to a first, receiving, chamber (12), upturning the device and gravity feeding said liquid from the receiving chamber (12) to a second, metering, chamber (15), and upturning again said device to dispense said metered liquid.

*Fig.1*

*Fig.2*

*Fig.3*

*Fig.4*

*Fig.5*

_Fig.6_

_Fig.7_

_Fig.8_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 801 286 (GEBR. BERNER) <br> * Column 3, line 24 - page 4, line 51; figures 1-4 * | 1-5,8-10 | G 01 F 11/26 |
| Y | | 7 | |
| X | US-A-1 687 705 (L. ANDROFF) <br> * Page 2, lines 9-37; figures 1-3 * | 8,11 | |
| Y | FR-A-1 047 119 (M.M. PENNA) <br> * Page 1, right-hand column, paragraphs 1-3; figures 1-4 * | 7 | |
| A | FR-A-1 070 404 (M.R. DUCAS) <br> * Page 1, right-hand column, paragraph 4 - page 2, left-hand column, paragraph 1; fig. * | 7 | |
| X | WO-A-8 903 362 (C. KONG) <br> * Page 23, line 21 - page 25, line 2; figure 6A * | 1-5,8-10 | |
| X | EP-A-0 239 358 (UNILEVER) <br> * Page 7, line 23 - page 10, line 10; page 18, line 12 - page 20, line 8; figures 1,2,13-16 * | 1-5,8-10 | |
| P,X | WO-A-9 100 501 (J.P. LONTRADE) <br> * Page 5, line 20 - page 7, line 30; figure 1-7 * | 1-5,8-10 | **TECHNICAL FIELDS SEARCHED (Int. Cl.5)** <br><br> G 01 F |

The present search report has been drawn up for all claims

| Place of search | Date of completion of search | Examiner |
|---|---|---|
| The Hague | 21 June 91 | HEINSIUS R. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
   document